(19)

Europäisches
Patentamt
European
Patent Office
Office européen
des brevets

(11) **EP 3 838 984 A1**

(12) **EUROPEAN PATENT APPLICATION**

(43) Date of publication:
**23.06.2021 Bulletin 2021/25**

(51) Int Cl.:
**C08L 23/08** $^{(2006.01)}$

(21) Application number: **19218827.4**

(22) Date of filing: **20.12.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME
KH MA MD TN**

(71) Applicant: **Borealis AG
1220 Vienna (AT)**

(72) Inventors:
• **DAMMERT, Ruth
  06850 Kulloo (FI)**
• **ÄÄRILÄ, Jari
  06850 Kulloo (FI)**

(74) Representative: **Kador & Partner PartG mbB
Corneliusstraße 15
80469 München (DE)**

(54) **POLYMER COMPOSITION AND ARTICLE**

(57)     Polymer composition comprising, (A) a first polyolefin component, wherein the first polyolefin component comprises, preferably consists of, a multimodal polyolefin polymer; (B) a second polyolefin component; and (C) optionally a filler, wherein the first polyolefin component (A) is present in an amount of from 65 wt.% to 99 wt.% based on the total polymer composition and the second polyolefin component (B) is present in an amount of from 35 wt.% down to 1 wt.% based on the total polymer composition; and wherein the polymer composition has a SHI (1/100) of from 6 to 25, a G' (5kPa) of 3000 Pa or less, and an environmental stress crack resistance (ESCR) of 1500h or more when determined according to IEC 60811-406:2012, procedure B (reagent is a solution of 10 % solution (by volume) in water of Igepal CO-630 (Antarox CO-630)).

EP 3 838 984 A1

**Description**

The present invention refers to a polymer composition comprising a first polyolefin component, a second polyolefin component and optionally a filler, to an article comprising a polyolefin composition, to the use of a polyolefin composition, to a cable comprising at least one layer comprising the polymer composition and a process for producing a cable.

Bi- or multimodal polyolefin such as polyethylene has very good processability and mechanical properties. Linear multimodal polyethylene is used for various applications. In particular such polymers are known i.a. as a jacketing layer material for e.g. cables.

However, sometimes a desired property profile cannot be obtained solely with a reactor made linear multimodal polyethylene and the polymer is not fully satisfactory as regards to the mechanical properties required for a polymer for example used in a cable layer, such as a jacketing layer.

Low density polyethylene (LDPE) which is e.g. produced in a high pressure process has been conventionally used in all types of cable layers including jacketing layers. The drawback thereof is their unsatisfactory mechanical properties required for a protective jacketing layer.

Safety, reliability and long use life are important key factors particularly required for many applications, in particular cable applications. As the outer jacketing layer provides the outer protection of the cable, it plays an important role to provide system functionality.

EP 2 471 077 B1 relates to a polymer composition comprising a polymer component and optionally a carbon black component, wherein the polymer composition has a flexural modulus of less than 390 MPa and a strain at break (%) of 700% or more. Besides, EP 2 471 077 B1 discloses the use of the polymer composition for producing a cable layer and to a cable comprising the polymer composition.

Multimodal polyethylene (PE) provides one way of tailoring the polymer properties. To enable the use of a multimodal PE in an article such as a layer, in particular a jacketing layer, the property balance should be optimised i.a. with respect to mechanical properties, such as strength, stress cracking resistance and flexibility, and to processability. Various solutions have been provided, but there is still need for alternative or improved property balance.

Moreover, e.g. single site catalyst (SSC) offers i.a. controlled incorporation of comonomers which provides a further means for tailoring the polymer. However, the processability of SS catalyst based PE is often problematic.

There is a need in the polymer field to find polymers which are suitable for demanding polymer applications, particularly for wire and cable (W&C) applications, where the cable materials must meet high requirements such as good mechanical properties like tensile strength, stress cracking resistance and shrinkage. Besides, the processing performance of such polymers should be satisfactory.

One of the objects of the present invention is to provide a polymer composition having excellent mechanical properties even after ageing combined with advantageous processing properties. Another object of the invention is to provide an article comprising a polymer composition having advantageous mechanical properties with advantageous processing properties and the use of a respective polymer composition for the production of an article.

A further object of the invention is to provide a cable comprising at least one layer comprising a polymer composition having advantageous mechanical properties with advantageous processing properties. Moreover, a process for producing a cable comprising applying one or more layer(s) on a conductor, wherein at least one layer comprises the polymer composition having advantageous mechanical properties.

It is a particular object of the invention to provide a polymer composition having a high tensile strength combined with a high environmental stress crack resistance (ESCR), a low deformation and a low shrinkage, having advantageous processability.

The problem has been solved by the present invention.

In one aspect the present invention relates to a polymer composition comprising

(A) a first polyolefin component, wherein the first polyolefin component comprises, preferably consists of, a multimodal polyolefin polymer,

(B) a second polyolefin component, and

(C) optionally a filler,

wherein the first polyolefin component (A) is present in an amount of from 65 wt.% to 99 wt.% based on the total polymer composition and the second polyolefin component (B) is present in an amount of from 35 wt.% down to 1 wt.% based of the total polymer composition; and

wherein the polymer composition has a $SHI_{(1/100)}$ of from 6 to 25, a G' (5kPa) of 3000 Pa or less, and an environmental stress crack resistance (ESCR) of 1500h or more when determined according to IEC 60811-406:2012, procedure B (reagent is a solution of 10 % solution (by volume) in water of Igepal CO-630 (Antarox CO-630)).

It has been found that the polymer composition has an excellent property balance for end applications of polymers, wherein a good mechanical protection is needed without sacrificing the flexibility and/or processability. In particular, the balance between high tensile strength also after ageing combined with a high ESCR, low deformation, low shrinkage and good absorption coefficient is advantageous.

The polymer composition of the invention is interchangeably shortly referred herein below as "polymer composition", the polyolefin components as "polymer" and the carbon black as "CB". It is understood herein that the term polymer component (polymer) can comprise one polymer component or a blend of two or more polymer components which are different.

Due to above advantageous properties the polymer composition is particularly suitable for pipe, film, wire and cable applications, especially for cable layer(s), preferably for a jacketing layer which provides the protective cover for the cables.

The invention is also directed to an article, comprising the inventive polymer composition as defined above or below or in the claims, preferably the article is a pipe, wire, cable or film., more preferably the article is a wire or cable.

Furthermore, the invention is directed to the use of the inventive polymer composition as defined above or below or in the claims for the production of an article, preferably the article is a pipe, wire, cable or film, more preferably the article is a wire or cable.

The invention is also directed to a cable comprising at least one layer which comprises the inventive polymer composition as defined above or below or in the claims.

Besides, the invention is directed to a process for producing a cable comprising applying, preferably coextruding, one or more layers on a conductor, wherein at least one layer comprises the inventive polymer composition as defined above or below or in claims.

The term "conductor" means herein above and below that the conductor comprises one or more wire(s). Moreover, the cable may comprise one or more such conductor(s). Preferably the conductor is an electrical conductor. "Cable" covers all type of wires and cables used in the wire and cable (W&C) applications.

The polymer composition preferably has a $SHI_{(1/100)}$ of from 7 to 23, preferably of from 8 to 21, more preferably from 8 to 20. The above SHI values indicate the advantageous application properties combined with processability properties of the polymer composition which preferably also contribute to the very good surface properties of the final article, such as a cable layer.

The polymer composition preferably has a storage modulus, G' (5kPa), of from 1000 to 2900 Pa, preferably of from 1500 to 2800 Pa, more preferably from 1700 to 2700 Pa, even more preferably from 1700 to 2600 Pa.

The polymer composition may have a value of $\tan(\delta)$ of from 2.5 to 5.0, preferably from 2.8 to 5.0, more preferably from 3.0 to 5.0.

The polymer composition preferably has an environmental stress crack resistance (ESCR) of 2000h or more and more preferably of 2500h or more when determined according to IEC 60811-406:2012, procedure B (reagent is a solution of 10 % solution (by volume) in water of Igepal CO-630 (Antarox CO-630)).

The polymer composition preferably has one or more, preferably at least two, more preferably all of the following properties:

a tensile strength of 22 MPa or more, preferably 24 MPa or more when measured according to ISO 527-2; the upper limit of tensile strength is not limited, but can vary, and may be for example up to 50 MPa, preferably up to 45 MPa; and/or

a tensile strength of 22 MPa or more, preferably 24 MPa or more measured according to ISO 527-2 after ageing 14 days at 110 °C according to IEC60811-401; the upper limit of tensile strength after ageing is not limited, but can vary, and may be for example up to 50 MPa, preferably up to 45 MPa; and/or

a deformation (115°C/6h) of less than 30%, preferably 27% or less, more preferably 25% or less, even more preferably the deformation (115°C/6h) is from 0 to 25% when measured according to IEC60811-508; and/or

a shrinkage (at 80°C/5 cycles) of 0.80% or less, preferably of 0.75% or less, more preferably 0.70% or less, even more preferably the shrinkage is from 0.00 to 0.70% when measured according to IEC60811-503:2012.

Preferably the polymer composition has further one or more, preferably at least two, more preferably all of the following properties:

strain at break (%) of 600% or more, preferably of 700% or more, when determined according to ISO 527-1:1993 using a pressed test specimen prepared according to ISO 527-2:1993 5A (specimen type 5A); the upper limit of the strain at break is not limited, but can vary, and may be e.g. of up to 1000%; and/or

an absorption coefficient (at 375 nm) of 350 abs/m or more, preferably of 400 abs/m or more when measured according to ASTM D-3349-17. The upper limit of the absorption coefficient (at 375 nm) is not limited, but can vary, and may be e.g. of up to 500 abs/m.

The polymer composition preferably has a density of 926 kg/m$^3$ or more, preferably of 928 kg/m$^3$ or more, and more preferably of 930 kg/m$^3$ or more. The upper limit of the density of the polymer composition is not limited, but can vary, and may be for example up to 980 kg/m$^3$, preferably up to 960 kg/m$^3$, more preferably up to 955 kg/m$^3$.

The polymer composition preferably has a density of from 900 kg/m$^3$ to 960 kg/m$^3$, preferably of from 910 kg/m$^3$ to 960 kg/m$^3$, more preferably of from 928 kg/m$^3$ to 960 kg/m$^3$, more preferably of from 930 kg/m$^3$ to 955 kg/m$^3$.

The polymer composition preferably has a MFR$_2$ (2.16 kg; 190 °C) of 0.1 to 10 g/10min, preferably of 0.1 to 5 g/10min, more preferably of 0.2 to 5 g/10min measured according to ISO 1133 (190°C, at 2.16 kg load).

The polymer composition preferably comprises at least 50 weight % (wt.%) of a polymer, preferably at least 70 wt.%, preferably at least 75 wt.%, preferably at least 80 wt.%, preferably at least 80 wt.% at least 85 wt.%, more preferably of at least 90 wt.%, based on the total polymer composition.

It is understood above and below or the claims that the wt.% ratios of the components of the polymer composition, when given "based on the total polymer composition", are chosen so that the total amount of the polymer composition is 100 wt.%.

The polymer composition may optionally comprise a filler (C).

The filler (C) can be present in the polymer composition. Preferably, the polymer composition contains up to 20 wt.%, preferably up to 15 wt.%, more preferably up to 10 wt.%, more preferably up to 6 wt.% of filler as such based on the total polymer composition, preferably based on the combined amount of the polyolefin components (A) and (B) and filler (C).

Preferably the filler (C) is present in an amount of 0.1 wt.% to 10 wt.%, preferably 0.1 wt.% to 7 wt.%, more preferably 0.1 wt.% to 5 wt.% based on the total polymer composition.

Preferably the filler is an inorganic and/or organic compound, more preferably the filler (C) is carbon black (CB).

In the following it is also referred to a carbon black component, CB component. The "CB component" means carbon black as such. The CB content in the polymer composition is defined above and below as an amount of the carbon black as such, based on the total polymer composition or based on the combined amount of the polyolefin components and CB, as specified in the context.

The optional CB component is preferably present in the polymer composition. Preferably, the polymer composition contains up to 10 wt.%, preferably from 0.1 to 10 wt.%, more preferably from 0.1 to 7 wt.%, more preferably from 0.1 to 5 wt.%, of carbon black as such ("pure" CB), based on the total polymer composition, preferably based on the combined amount of the polyolefin components and CB.

The polymer composition is preferably a polyolefin composition, wherein the polymer comprises at least two polyolefin components, the first polyolefin component (A) and the second polyolefin component (B).

The first polyolefin component (A) preferably is present in an amount of from 70 to 98 wt.%, more preferably of from 75 to 97 wt.% based on the total polymer composition.

The second polyolefin component (B) preferably is present in an amount of from 2 to 30 wt.%, more preferably of from 3 to 25 wt.% based on the total polymer composition.

In a preferred embodiment the first polyolefin component (A) is present in an amount of from 70 to 98 wt.%, and the second polyolefin component (B) is present in an amount of from 2 to 30 wt.% based on the total polymer composition, more preferably the first polyolefin component (A) is present in an amount of from 75 to 97 wt.% and the second polyolefin component (B) is present in an amount of from 3 to 25 wt.% based on the total polymer composition

The first polyolefin component (A) preferably consists of a multimodal polyolefin polymer.

The polymer composition is preferably a polyolefin composition, wherein the polymer comprises at least two polyolefin components, whereby at least one polyolefin component is a polyethylene component, preferably at least two polyolefin components are polyethylene components. Preferably the first polyolefin component (A) and the second polyolefin component (B) are polyethylene components.

The term "polyethylene" means homopolymer of ethylene or copolymer of ethylene with one or more comonomer(s).

More preferably, the polymer of the preferable polyethylene composition comprises a blend of at least two polyethylene components.

According to a preferred embodiment the first polyolefin component (A) is a linear polyethylene homo- or copolymer having a density of 900 kg/m$^3$ to 950 kg/m$^3$ and the second polyolefin polymer (B) is a low density polyethylene homo- or copolymer having a density of 880 kg/m$^3$ to 930 kg/m$^3$, preferably the first polyolefin polymer (A) is a linear polyethylene copolymer having a density of 910 kg/m$^3$ to 950 kg/m$^3$ and the second polyolefin polymer (B) is a low density polyethylene homo- or copolymer having a density of 900 kg/m$^3$ to 930 kg/m$^3$.

By "linear polyethylene homo- or copolymer" is meant a polyethylene, which is substantially free of long chain branches. It may contain, however, short chain branches having a length of up to 8 carbon atoms, such as up to 4 or 6 carbon atoms, which short chain branches originate from comonomer incorporation.

According to a preferred embodiment of the polymer composition, the polymer composition comprises a first polyolefin polymer being a multimodal linear polyethylene homo- or copolymer (A), preferably multimodal linear polyethylene copolymer (A), and a second polyolefin polymer (B) being a low density polyethylene homo- or copolymer.

As well known "comonomer" refers to copolymerisable comonomer units.

More preferably, the polyolefin component (A) is a linear low density polyethylene (LLDPE) polymer or a linear medium density polyethylene (MDPE) and/or the polyolefin component (B) is a polyethylene which has long chain branching, more preferably a low density polyethylene (LDPE) polymer.

Long chain branching means herein polymer chain branches with length of more than 12 carbon atoms present in the backbone and/or other branches of a polymer. E.g. an LDPE polymer contains long chain branches.

The polyolefin components (A) and (B) can be blended mechanically by conventional means, for example in a mixer or an extruder, or in both, or by blending in situ, i.e. during the polymerisation process of the component(s). Mechanical and in-situ blending are both well known in the field. Preferably, the blend of the polymer composition is a mechanical blend. The optional CB component (C) is preferably added to the other component(s) in the form of a CBMB in a manner well known in the art.

The final choice of the polyolefin components and the weight ratio thereof is within the skills of a skilled person and can be adapted based on the properties of the individual polyolefin components in order to meet the new and inventive property balance of claim 1, or, preferably, the preferable further subgroups and further properties and embodiments of the invention.

More preferably the polymer composition contains,

(A) at least 65 wt.%, preferably at least 70 wt.%, more preferably at least 75 wt.%, such as from 65 to 97 wt.%, of an MDPE or LLDPE polymer which is preferably a multimodal copolymer of ethylene with one or more olefin comonomers, preferably with $C_3$-$C_{20}$ alpha olefin comonomer(s);

(B) 35 wt.% or less, more preferably 30 wt.% or less, more preferably 25 wt.% or less, such as from 35 to 3 wt.% of an LDPE selected from an LDPE homopolymer or an LDPE copolymer of ethylene with one or more comonomer(s), and

(C) contains up to 10 wt.%, preferably from 0.1 to 10 wt.%, more preferably from 0.5 to 7 wt.%, more preferably from 1 to 5 wt.%, such as from 0.1 to 5 wt%, of the optional carbon black as such, based on the total polymer composition, preferably based on the combined amount of polyolefin component (A), polyolefin component (B) and the optional CB component (C). CB component is preferably present.

Again, it is understood above and below or the claims that the wt.% ratios of the components of the polymer composition, when given "based on the combined amount of the polyolefin component (A) polyolefin component (B) and the optional CB component (C)", are chosen so that the total combined amount of the components (A) to (C) is 100 wt.%.

Multimodal linear low density copolymer of ethylene is referred herein as "multimodal LLDPE copolymer". Multimodal linear medium density copolymer of ethylene is referred herein as "multimodal MDPE copolymer". The multimodality of the LLDPE or MDPE copolymer, unless otherwise stated, means herein the multimodality with respect to the molecular weight distribution (MWD) of the LLDPE or MDPE copolymer component (A). The multimodality of the (A) the LLDPE or MDPE copolymer further contributes to the preferable mechanical property balance of the invention.

The polymer composition of the invention may contain further components such as further polymer component(s) and/or additive(s), preferably additive(s). Examples of groups of suitable additives are antioxidant(s), stabiliser(s), such as process stabilizers and UV stabilizers, acid scavenger(s) and metal deactivators. Further examples of groups of suitable additives are crosslinking agents, such as free radical generating agent(s), e.g. organic peroxide(s), scorch retarder(s) (SR), crosslinking booster(s), processing aid(s), flame retardant additive(s), water tree retardant additive(s), inorganic filler(s) and voltage stabilizer(s). These groups of additives and the individual additive compounds therein are well known in the polymer field.

The preferred polymer composition consists of the polyolefin components (A) and (B), preferably of the blend of polyolefin component (A) and polyolefin component (B), as the only polymer component(s). The expression means that the polymer composition does not contain further components, but the polymer or blend of polyolefin components (A) and (B) as the sole polymer component(s). However, it is to be understood herein that the polymer composition may comprise further component(s) other than polymer components, such as the optional CB component (C) and/or additive(s) which may optionally be added in a mixture with a carrier polymer, i.e. in so called master batch. Accordingly, the polymer composition may comprise, and preferably further comprises, a carrier polymer of a carbon black master batch (CBMB). The carrier polymer of a master batch is understood to be within the meaning of "polyolefin component" or "polymer component".

The polymer composition of the invention may be crosslinkable, e.g. for crosslinkable cable applications which are subsequently crosslinked. Crosslinking can be effected i.a. by radical reaction using radiation or free radical generating agents. Examples of such free radical generating agents are peroxides including inorganic and organic peroxide(s). A further well known crosslinking method is crosslinking via functional groups, e.g. by hydrolysing hydrolysable silane groups, which are attached (either via copolymerisation or via grafting) to polymer, and subsequently condensing the formed silanol groups using a silanol condensation catalyst.

The further and preferable properties, subgroups as well as embodiments of the polymer composition given above or below are given in general terms meaning that they can be combined in any combination to further define the preferable embodiments of the invention.

The polymer composition comprises the polyolefin components (A) and (B), preferably the blend of polyolefin component (A) and polyolefin component (B), and the optional CB component (C) as defined above. The components (A) to (C) are further described below in terms of further properties and preferable subgroups or embodiments of further and above given properties. The detailed description for components applies naturally for the polymer composition, the article as well as the cable. As evident said further or preferable properties, subgroups and embodiments of components (A) to (C) are given in general terms meaning that they can be combined in any combination to further define the preferable embodiments of the invention. If not specified in the description part, then the measurement methods for the further preferable properties as defined above or below for the polymer composition, polymer, the CB, article and the cable are described later below under "Determination methods".

Polyolefin component (A)

Polyolefin component (A) is preferably an olefin homo- or copolymer which contains one or more comonomer(s), more preferably a polyethylene, preferably a linear low density polyethylene (LLDPE) polymer or a linear medium density polyethylene (MDPE). The preferred polyolefin component (A) is a multimodal linear low density or a multimodal linear medium density copolymer of ethylene with one or more olefin comonomers, i.e. a multimodal LLDPE copolymer or a multimodal MDPE copolymer.

The term "multimodal" means herein, unless otherwise stated, multimodality with respect to molecular weight distribution and includes also bimodal polymer. Generally, a polyethylene comprising at least two polyethylene fractions, which have been produced under different polymerisation conditions resulting in different (weight average) molecular weights and molecular weight distributions for the fractions, is referred to as "multimodal". The prefix "multi" relates to the number of different polymer fractions present in the polymer. Thus, for example, multimodal polymer includes so called "bimodal" polymer consisting of two fractions. The form of the molecular weight distribution curve, i.e. the appearance of the graph of the polymer weight fraction as a function of its molecular weight, of a multimodal polymer will show two or more maxima or is typically distinctly broadened in comparison with the curves for the individual fractions. For example, if a polymer is produced in a sequential multistage process, utilizing reactors coupled in series and using different conditions in each reactor, the polymer fractions produced in the different reactors will each have their own molecular weight distribution and weight average molecular weight. When the molecular weight distribution curve of such a polymer is recorded, the individual curves from these fractions form typically together a broadened molecular weight distribution curve for the total resulting polymer product.

The multimodal LLDPE or multimodal MDPE copolymer usable in the present invention comprises a lower weight average molecular weight (LMW) component (1) and a higher weight average molecular weight (HMW) component (2). Said LMW component has a lower molecular weight than the HMW component.

Naturally, the multimodal LLDPE copolymer or multimodal MDPE copolymer may be, and preferably is, multimodal also with respect to density and comonomer content. I.e. the LMW and HMW components preferably have different comonomer content and density.

The multimodal LLDPE or multimodal MDPE is preferably produced by a coordination catalyst, preferably selected from a Ziegler Natta catalyst, a single site catalyst, which comprises a metallocene and non-metallocene catalyst, and a Cr catalyst, or any mixture thereof, more preferably is produced by Ziegler Natta catalyst. Herein such polymers are referred to as znLLDPE or znMDPE copolymers.

The multimodal LLDPE or multimodal MDPE copolymer, preferably the multimodal znLLDPE or multimodal znMDPE copolymer, comprises preferably:

(i) from 30 to 70 wt.%, preferably from 40 to 60 wt.%, based on the combined amount of components (1) and (2), of a low molecular weight (LMW) ethylene polymer selected from ethylene homopolymer and a copolymer of ethylene with one or more alpha-olefin comonomer(s) having from 3 to 20 carbon atoms, and

(ii) from 30 to 70 wt.%, preferably from 40 to 60 wt.%, based on the combined amount of components (1) and (2), of a high molecular weight (HMW) copolymer of ethylene with one or more alpha-olefin comonomer(s) having from 3 to 20 carbon atoms, wherein the LMW component and HMW component are different.

More preferably, the multimodal LLDPE copolymer or multimodal MDPE copolymer, preferably the multimodal znLLDPE or multimodal znMDPE copolymer, comprises:

(i) from 40 to 60 wt.%, preferably 40 to 50 wt.%, more preferably 42 to 50 wt%, based on the combined amount of components (1) and (2), of a low molecular weight (LMW) ethylene polymer selected from ethylene homopolymer or a copolymer of ethylene and one or more alpha-olefins having from 3 to 16 carbon atoms, and preferably having a weight average molecular weight of from 5000 to 150000 g/mol, preferably 5000 to 130000 g/mol, preferably from 10000 to 100000 g/mol, more preferably from 15000 to 80000 g/mol; and

(ii) from 40 to 60 wt.%, preferably 50 to 60 wt.%, more preferably 50 to 58 wt.%, based on the combined amount of components (1) and (2), of a high molecular weight (HMW) copolymer of ethylene with one or more alpha-olefin comonomer(s) having from 3 to 16 carbon atoms and preferably having a weight average molecular weight of from 100000 to 1000000 g/mol, preferably from 130000 to 500000 g/mol, more preferably from 150000 to 500000 g/mol.

The low molecular weight ethylene polymer (1) is an ethylene homo- or copolymer and preferably has a density which is higher than the density of HMW component (2). The $MFR_2$ (ISO 1133, 190°C at 2.16 load) of said (LMW) ethylene homo- or copolymer is preferably less than 1000 g/10 min, preferably from 4.0 to 800 g/10 min. Preferably the (LMW) homopolymer of ethylene (1) has a density of less than 975 kg/m$^3$, preferably from 910 to 970 kg/m$^3$.
The high molecular weight copolymer (2) is a copolymer of ethylene and one or more alpha-olefins having from 4 to 10, preferably 4 to 8 carbon atoms.
The $MFR_2$ (ISO 1133, 190°C at 2.16 load) of said (HMW) ethylene copolymer (2) is preferably less than 1.0 g/10 min, more preferably from 0.001 to 0.5 g/10 min. The high molecular weight ethylene copolymer of ethylene (2) of the PE copolymer has preferably a density of from 890 to 940 kg/m$^3$, preferably of from 895 to 930 kg/m$^3$.
As it is well known to the person skilled in the art, in a cascaded multi-step process the density and melt index can be measured from the polymer produced in the first step, and the blend withdrawn from the subsequent steps. Thus, if one of the components is produced in a subsequent step of the process, then the melt index and density must be calculated by using suitable mixing rules, suitably those given in the experimental section below.
The LLDPE copolymer, preferably the multimodal znLLDPE copolymer, may have a density of 950 kg/m$^3$ or less, preferably from 905 to 945 kg/m$^3$. For the preferred multimodal znLLDPE copolymer in particular, the density is preferably more than 915 kg/m$^3$. In certain end applications the multimodal znLLDPE copolymer has preferably a density from 915 to 930 kg/m$^3$.
The melt flow rate, $MFR_2$, (ISO 1133, 190°C at 2.16 kg load) of the LLDPE copolymer, preferably the multimodal znLLDPE copolymer, is preferably in the range of 0.01 to 20 g/10min, more preferably from 0.05 to 10 g/10min, even more preferably from 0.05 to 5 g/10min, even more preferably in the range of 0.1 to 5 g/10min, and most preferably from 0.2 to 3 g/10 min.
The melt flow rate, $MFR_{21}$, (ISO 1133, 190°C at 21.6 kg load) of the LLDPE copolymer, preferably the multimodal znLLDPE copolymer, is preferably in the range of 30 to 100 g/10min, more preferably from 30 to 90 g/10min, even more preferably in the range of 35 to 80 g/10min. Additionally or alternatively, the flow rate ratio $MFR_{21}/MFR_2$ of the LLDPE copolymer is from 60 to 120, and preferably from 65 to 100, such as from 70 to 90.
The term "LLDPE copolymer" as used herein encompasses polymers comprising repeat units deriving from ethylene and at least one other $C_{3-20}$ alpha olefin monomer. Preferably, LLDPE copolymer, preferably the multimodal znLLDPE copolymer, may be formed from ethylene together with at least one $C_{4-10}$ alpha-olefin comonomer, e.g. 1-butene, 1-hexene or 1-octene. Preferably, LLDPE copolymer, preferably the multimodal znLLDPE copolymer, is a binary copolymer, i.e. the polymer contains ethylene and one comonomer, or a terpolymer, i.e. the polymer contains ethylene and two or three comonomers. Preferably, LLDPE copolymer, preferably the multimodal znLLDPE copolymer, comprises an ethylene hexene copolymer, ethylene octene copolymer or ethylene butene copolymer. The amount of comonomer present in LLDPE copolymer, preferably the multimodal znLLDPE copolymer, is at least 0.01 mol%, preferably from 0.02 to 8 mol%, more preferably from 0.2 to 6 mol% relative to ethylene.
The multimodal LLDPE copolymer, may comprise further polymer components, e.g. three components being a trimodal LLDPE copolymer. The amount of such further components is preferably up to 50 wt.%, preferably up to 40 wt.%, based on the amount of the PE copolymer.
Preferably the multimodal LLDPE copolymer, e.g. the preferable bimodal PE copolymer, may also comprise e.g. up to 5 wt.% of a well known polyethylene prepolymer which is obtainable from a prepolymerisation step as well known in the art, e.g. as described in WO9618662. In case of such prepolymer, the prepolymer component is typically comprised in one of LMW and HMW components, or alternatively forms a separate Mw fraction, i.e. further component, of the LLDPE copolymer and thus contributes to the multimodality.

By ethylene homopolymer is meant a polymer which substantially consists of ethylene units. As the process streams may have a small amount of other polymerisable species as impurities the homopolymer may contain a small amount of units other than ethylene.

Suitable examples for producing the multimodal LLDPE copolymer are shown, for instance, in WO 99/065039 A and WO 97/003124 A.

The MDPE copolymer, preferably the multimodal znMDPE copolymer, may have a density of 970 kg/m$^3$ or less, preferably from 930 to 950 kg/m$^3$. For the preferred multimodal znMDPE copolymer in particular, the density is preferably more than 932 kg/m$^3$. In certain end applications the multimodal znMDPE copolymer has preferably a density from 935 to 945 kg/m$^3$.

The melt flow rate, MFR$_2$ (ISO 1133, 190°C at 2.16 load) of the MDPE copolymer, preferably the multimodal znMDPE copolymer, is preferably in the range of 0.01 to 20 g/10min, preferably from 0.05 to 10 g/10min, preferably from 0.05 to 5 g/10min, more preferably in the range of 0.1 to 5 g/10min, and even more preferably from 0.2 to 3 g/10 min.

The melt flow rate, MFR$_{21}$, (ISO 1133, 190°C at 21.6 kg load) of the MDPE copolymer, preferably the multimodal znMDPE copolymer, is preferably in the range of 30 to 100 g/10min, more preferably from 30 to 90 g/10min, even more preferably in the range of 35 to 80 g/10min. Additionally or alternatively, the flow rate ratio MFR$_{21}$/MFR$_2$ of the MDPE copolymer is from 60 to 120, and preferably from 65 to 100, such as from 70 to 90.

The term "MDPE copolymer" as used herein encompasses polymers comprising repeat units deriving from ethylene and at least one other C$_{3-20}$ alpha olefin monomer. Preferably, MDPE copolymer, preferably the multimodal znMDPE copolymer, may be formed from ethylene together with at least one C$_{4-10}$ alpha-olefin comonomer, e.g. 1-butene, 1-hexene or 1-octene. Preferably, MDPE copolymer, preferably the multimodal znMDPE copolymer, is a binary copolymer, i.e. the polymer contains ethylene and one comonomer, or a terpolymer, i.e. the polymer contains ethylene and two or three comonomers. Preferably, MDPE copolymer, preferably the multimodal znMDPE copolymer, comprises an ethylene hexene copolymer, ethylene octene copolymer or ethylene butene copolymer. The amount of comonomer present in MDPE copolymer, preferably the multimodal znMDPE copolymer, is at least 0.01 mol-%, preferably from 0.02 to 6 mol% more preferably from 0.1 to 4 mol% relative to ethylene.

The multimodal MDPE copolymer, may comprise further polymer components, e.g. three components being a trimodal MDPE copolymer. The amount of such further components is preferably up to 50 wt.%, preferably up to 40 wt.%, based on the amount of the PE copolymer. Preferably the multimodal MDPE copolymer consists of LMW and HMW polymer components. Optionally, the multimodal MDPE copolymer, e.g. the preferable bimodal PE copolymer, may also comprise e.g. up to 5 wt.% of a well known polyethylene prepolymer which is obtainable from a prepolymerisation step as well known in the art, e.g. as described in WO 96/18662. In case of such prepolymer, the prepolymer component is typically comprised in one of LMW and HMW components, or alternatively forms a separate Mw fraction, i.e. further component, of the MDPE copolymer and thus contributes to the multimodality.

By ethylene homopolymer is meant a polymer which substantially consists of ethylene units. As the process streams may have a small amount of other polymerisable species as impurities the homopolymer may contain a small amount of units other than ethylene.

As mentioned above, polyolefin component (A), preferably the multimodal LLDPE or the multimodal MDPE copolymer, can be polymerised using a coordination catalyst, such as Ziegler Natta (ZN) catalyst, SS catalyst, such as a metallocene or non-metallocene catalyst, or a Cr catalyst, or any mixture thereof, more preferably using a ZN or SS catalyst.

When the catalyst is a SS catalyst, then preferably the single site catalyst is a metallocene catalyst. Such catalysts comprise a transition metal compound which typically contains an organic ligand, preferably a cyclopentadienyl, indenyl or fluorenyl ligand. Preferably the catalyst contains two cyclopentadienyl, indenyl or fluorenyl ligands, which may be bridged by a group preferably containing silicon and/or carbon atom(s). Further, the ligands may have substituents, such as alkyl groups, aryl groups, arylalkyl groups, alkylaryl groups, silyl groups, siloxy groups, alkoxy groups and like. Suitable metallocene compounds are known in the art and are disclosed, among others, in WO97/28170, WO98/32776, WO99/61489, WO03/010208, WO03/051934, WO03/051514, WO2004/085499, WO2005/002744, EP1752462A and EP1739103A.

In a preferred embodiment, the polyolefin component (A), preferably the multimodal LLDPE or the multimodal MDPE copolymer, is produced using a ZN catalyst. Preferably the LMW and HMW components are produced using the same ZN catalyst.

The Ziegler-Natta polymerisation catalyst used for polymerising the polymer component (A), preferably the multimodal LLDPE or multimodal MDPE, is not critical and may be e.g. any ZN catalyst suitable for producing the multimodal znLLDPE or multimodal znMDPE copolymer of the invention. Accordingly, Ziegler-Natta catalysts are one of the very well known and commonly used coordination catalysts for producing polymers and typically comprise a transition metal component and an activator. A typical example of ZN catalysts are those produced by activating titanium halides with organometallic compounds such as triethylaluminium.

More specifically, the transition metal component comprises typically a metal of Group 4 or 5 of the Periodic System (IUPAC) as an active metal. In addition, it may contain other metals or elements, like elements of Groups 2, 13 and 17.

Preferably and as mentioned above, the polymerisation catalyst contains a titanium compound, an aluminium compound and a magnesium compound. Such Ziegler-Natta catalysts can be homogenous Ziegler-Natta catalysts or, alternatively, heterogeneous, i.e. solid, Ziegler-Natta catalysts which may be a solidified or precipitated products of the starting materials or be supported on a particulate external support.

The titanium compound is usually a halogen containing titanium compound, preferably chlorine containing titanium compound. Especially preferred titanium compound is titanium tetrachloride.

The aluminium compound is typically aluminium alkyl. Especially preferred compounds are aluminium alkyl dichlorides.

The magnesium compound is typically a reaction product of a magnesium dialkyl, an alcohol and a chlorinating agent. The alcohol is conventionally a linear or branched aliphatic monoalcohol.

The particulate external support can be an inorganic oxide support, such as silica, alumina, titania, silica-alumina and silica-titania, or a magnesium based support, such as magnesium dichloride support.

One preferable catalyst can be prepared by sequentially contacting the carrier with the above mentioned compounds, as described in EP688794A or WO99/51646. Alternatively, it can be prepared by first preparing a solution from the components and then contacting the solution with a carrier, as described in WO01/55230. Other suitable Ziegler-Natta catalysts contain a titanium compound together with a magnesium halide compound acting as a support. Thus, the catalyst contains a titanium compound on a magnesium dihalide, like magnesium dichloride. Such catalysts are disclosed, for instance, in WO2005/118655 and EP810235A.

As still further preferable embodiment of Ziegler-Natta catalysts are catalysts prepared by a method, wherein an emulsion is formed, wherein the active components form a dispersed, i.e. a discontinuous phase in the emulsion of at least two liquid phases. The dispersed phase, in the form of droplets, is solidified from the emulsion, wherein catalyst in the form of solid particles is formed. The principles of preparation of these types of catalysts are given in WO2003/106510 of Borealis.

The Ziegler-Natta catalyst is used together with an activator. Suitable activators are metal alkyl compounds and especially aluminium alkyl compounds. These compounds include alkyl aluminium halides.

The preferred polyolefin component (A) is a multimodal (e.g. bimodal or trimodal) LLDPE or multimodal (e.g. bimodal or trimodal) MDPE copolymer which can be made by mechanical blending two or more, separately prepared polymer components or, preferably, by in-situ blending in a multistage polymerisation process during the preparation process of the polyolefin components. Both mechanical and in-situ blending is well known in the field.

Accordingly, preferred multimodal LLDPE or multimodal MDPE copolymers, are prepared by in-situ blending in a multistage, i.e. two or more stage, polymerisation or by the use of two or more different polymerisation catalysts, including multi- or dual site catalysts, in a one stage polymerisation.

Preferably the multimodal LLDPE or multimodal MDPE copolymer is produced in at least two-stage polymerisation using the same Ziegler-Natta catalyst. Thus, for example two slurry reactors or two gas phase reactors, or any combinations thereof, in any order can be employed. Preferably however, the multimodal LLDPE or multimodal MDPE copolymer is made using a slurry polymerisation in loop reactors followed by a gas phase polymerisation in a gas phase reactor.

Polymerisation technology based on loop reactor - gas phase reactor system has been developed by Borealis and is known as BORSTAR technology. The multimodal LLDPE or multimodal MDPE copolymer is thus preferably formed in a process comprising a first slurry loop, preferably a first slurry loop and a second slurry loop, polymerisation followed by gas phase polymerisation. Examples of such processes are given, for instance, in WO 2015/086812A and WO 2015/086813A.

The conditions used in such a process are well known. For slurry reactors, the reaction temperature will generally be in the range 60 to 110°C (e.g. 85-110°C), the reactor pressure will generally be in the range 5 to 80 bar (e.g. 50-65 bar), and the residence time will generally be in the range 0.3 to 5 hours (e.g. 0.5 to 2 hours). The diluent used will generally be an aliphatic hydrocarbon having a boiling point in the range -70 to +100°C. In such reactors, polymerisation may if desired be effected under supercritical conditions. Slurry polymerisation may also be carried out in bulk where the reaction medium is formed from the monomer being polymerised.

For gas phase reactors, the reaction temperature used will generally be in the range 60 to 115°C (e.g. 70 to 110°C), the reactor pressure will generally be in the range 10 to 25 bar, and the residence time will generally be 1 to 8 hours. The gas used will commonly be a non-reactive gas such as nitrogen or low boiling point hydrocarbons such as propane together with monomer (e.g. ethylene).

Preferably, the lowest molecular weight polymer fraction is produced in a continuously operating loop reactor where ethylene is polymerised in the presence of a polymerisation catalyst as stated above and a chain transfer agent such as hydrogen. The diluent is typically an inert aliphatic hydrocarbon, preferably isobutane or propane.

The higher molecular weight component can then be formed in a gas phase reactor using the same catalyst.

In a multistage polymerisation it is not possible to measure polymer properties produced in each reactor directly.

The polymer composition comprising the multimodal LLDPE or multimodal MDPE copolymer is homogenised and pelletised using a method known in the art. An overview is given, for example, in Rauwendaal: Polymer Extrusion (Hanser, 1986), chapters 10.3 to 10.5, pages 460 to 489.

Polyolefin component (B)

The polyolefin component (B) is preferably an olefin homopolymer or copolymer with one or more comonomer(s), more preferably a polyethylene, preferably a polyethylene which may be produced in a high pressure process or in a low pressure process. More preferably, the polyolefin component (B) is a polyethylene which has long chain branching, more preferably is a low density polyethylene (LDPE) polymer. The meaning of the LDPE polymer is well known and documented in the literature.

The polyolefin component (B) is preferably an LDPE polymer produced by polymerising ethylene in a high pressure process by utilising free-radical initiators. More preferably, the LDPE polymer is selected from an LDPE homopolymer or an LDPE copolymer of ethylene with one or more comonomers. Suitable methods for producing the polyolefin component (B) are shown, for instance, in WO 2007/045315 A, WO 2019/121730 A, WO 2017/102293 A and WO 2013/083285 A.

In case of an LDPE copolymer of ethylene, the one or comonomer(s) may be selected from non-polar comonomer(s) or polar comonomer(s), or from any mixtures thereof, as well known.

As the polar comonomer, comonomer(s) containing hydroxyl group(s), alkoxy group(s), carbonyl group(s), carboxyl group(s), ether group(s) or ester group(s), or a mixture thereof, can used. More preferably, comonomer(s), if present, containing carboxyl and/or ester group(s) are used as said polar comonomer. Still more preferably, the polar comonomer(s) of an LDPE copolymer of ethylene is selected from the groups of acrylate(s), methacrylate(s) or acetate(s), or any mixtures thereof. If present in said LDPE copolymer of ethylene, the polar comonomer(s) is preferably selected from the group of alkyl acrylates, alkyl methacrylates or vinyl acetate, or a mixture thereof. Further preferably, said polar comonomers are selected from $C_1$- to $C_6$-alkyl acrylates, $C_1$- to $C_6$-alkyl methacrylates or vinyl acetate. Still more preferably, said LDPE copolymer of ethylene, is a copolymer of ethylene with $C_1$- to $C_4$-alkyl acrylate, such as methyl, ethyl, propyl or butyl acrylate, or vinyl acetate, or any mixture thereof.

Non-polar comonomer means herein comonomer(s) which do not contain hydroxyl group(s), alkoxy group(s), carbonyl group(s), carboxyl group(s), ether group(s) or ester group(s). One group of preferable non-polar comonomer(s) comprise, preferably consist of, monounsaturated (= one double bond) comonomer(s), preferably olefins, preferably alpha-olefin(s), more preferably $C_3$ to $C_{10}$ alpha-olefin(s), such as propylene, 1-butene, 1-hexene, 4-methyl-1-pentene, styrene, 1-octene, 1-nonene; polyunsaturated (= more than one double bond) comonomer(s); a silane group containing comonomer(s); or any mixtures thereof.

The polyolefin component (B), preferably the LDPE polymer may contain hydrolysable silane groups containing comonomer or be grafted with hydrolysable silane containing compounds in a manner known in the art. This may be the case if e.g. crosslinking the polymer via silane technology is desired for the end application. A method for producing such copolymers is given, for instance, in EP 1923404 A.

The LDPE polymer may optionally have an unsaturation which preferably originates from vinyl groups, vinylidene groups and *trans*-vinylene groups. The unsaturation can be provided by polymerising monomer, preferably ethylene, in the presence of a chain transfer agent (CTA), which introduces e.g. vinyl groups to the polymer chain, or in the presence of one or more polyunsaturated comonomer(s), as mentioned above, and optionally in the presence of a chain transfer agent which introduces e.g. vinyl groups to the polymer chain. The unsaturated polyolefins and the preferable unsaturated LDPE polymers are well known. The unsaturation level can be influenced by the selected polymerisation conditions such as peak temperatures and pressure, as well known in the field.

It is well known that e.g. propylene can be used as a comonomer or as a chain transfer agent (CTA), or both, whereby it can contribute to the total amount of the C-C double bonds, preferably to the total amount of the vinyl groups. Herein, when a compound which can also act as comonomer, such as propylene, is used as CTA for providing double bonds, then said copolymerisable comonomer is not calculated to the comonomer content.

Preferably the density of the polyolefin component (B), preferably of an LDPE polymer, is higher than 860 $kg/m^3$. Preferably the density of polyolefin component (B), preferably of an LDPE polymer is not higher than 960 $kg/m^3$, more preferably from 880 to 950 $kg/m^3$, more preferably from 900 to 940 $kg/m^3$, even more preferably from 910 to 930 $kg/m^3$.

The $MFR_2$ (ISO 1133, 190°C at 2.16 load) of the polyolefin component (B) preferably of an LDPE polymer, is preferably from 0.01 to 50 g/10min, preferably is from 0.05 to 15 g/10min, more preferably 0.1 to 10 g/10min.

The preferred polyolefin component (B) is an LDPE homopolymer or an LDPE copolymer as defined above, which may optionally be unsaturated. If the LDPE homopolymer is unsaturated, then the unsaturation is provided by a chain transfer agent (CTA) and/or by polymerisation conditions. If the LDPE copolymer is unsaturated, then the unsaturation can be provided by any of the following means: by a chain transfer agent (CTA), by one or more polyunsaturated comonomer(s) and/or by polymerisation conditions. In case of an LDPE copolymer, it is preferably an unsaturated LDPE copolymer of ethylene with at least one polyunsaturated comonomer, preferably a diene, and optionally with other comonomer(s), such as polar comonomer(s) which is preferably acrylate or acetate comonomer(s); more preferably an unsaturated LDPE copolymer of ethylene with a polyunsaturated comonomer, preferably a diene.

The LDPE homo- or copolymers (B) suitable for the present invention are commercially available or can be produced analogously or according to known polymerisation process.

The high pressure (HP) process is the preferred process for producing a polyolefin component (B) of the polymer composition, preferably a low density polyethylene (LDPE) polymer selected from an LDPE homopolymer or an LDPE copolymer of ethylene with one or more comonomers.

Accordingly, the polyolefin component (B) of the invention is preferably produced at high pressure by free radical initiated polymerisation in the presence of initiator(s) (referred to as high pressure radical polymerisation).

The high pressure (HP) polymerisation and the adjustment of process conditions for further tailoring the other properties of the polyolefin component (B) depending on the desired end application are well known and described in the literature, and can be readily be used by a skilled person.

Suitable temperatures range up to 400 °C, preferably from 80 to 350°C and pressure ranges from 70 MPa to 500 MPa, preferably from 100 to 400 MPa, more preferably from 100 to 350 MPa. Pressure can be measured at least in compression stage and after the tube. Temperature can measured at several points during all steps.

After the separation the obtained polymer is typically in a form of a polymer melt which is normally mixed and pelletised in a pelletising section, such as pelletising extruder, arranged in connection to the HP reactor system. Optionally, additive(s), such as antioxidant(s), can be added in this mixer in a known manner to result in the polymer composition.

Further details of the production of ethylene (co)polymers by high pressure radical polymerisation can be found i.a. in the Encyclopedia of Polymer Science and Engineering, Vol. 6 (1986), pp 383-410 and Encyclopedia of Materials: Science and Technology, 2001 Elsevier Science Ltd.: "Polyethylene: High-pressure, R.Klimesch, D.Littmann and F.-O .Mähling pp. 7181-7184. Moreover, i.a. WO 9308222 describes a high pressure radical polymerisation of ethylene with polyunsaturated monomers, such as an $\alpha,\omega$-alkadienes, to increase the unsaturation of an ethylene copolymer.

Filler (C)

The optional filler (C) is preferably carbon black.

The optional carbon black (CB) used in the CB component (C) can be any CB suitable for the polymer composition, for instance any conventional carbon black commercially available and used in the cable layers, preferably in the jacketing layer. Suitable examples are so called furnace blacks which are well known in the field and documented in the literature. As non-exhaustive examples of a supplier of such furnace blacks e.g. Orion Engineered Carbons GmbH can be mentioned.

Preferably, the polymer composition contains up to 10 wt.%, preferably from 0.1 to 10 wt.%, more preferably from 0.5 to 7 wt.%, more preferably from 1 to 5 wt.%, such as from 0.1 to 5 wt% of carbon black as such ("pure" CB), based on the total polymer composition, preferably based on the combined amount of the polyolefin components and CB.

The CB used in the present invention can also be introduced to the polymer composition as a master batch (CBMB).

According to a preferred embodiment of the polymer composition the first polyolefin component (A) comprises from 40 to 60 wt.%, preferably 40 to 50 wt.%, more preferably 42 to 50 wt.%, based on the combined amount of components (1) and (2), of a low molecular weight (LMW) ethylene polymer (1) selected from ethylene homo- or a copolymer of ethylene and one or more alpha-olefins having from 3 to 10 carbon atoms, and having an $MFR_2$ of from 4.0 to 1000 g/10 min, preferably from 4.0 to 800 g/10 min; and from 40 to 60 wt.%, preferably 50 to 60 wt.%, more preferably 50 to 58 wt.%, based on the combined amount of components (1) and (2), of a high molecular weight (HMW) copolymer (2) of ethylene with one or more alpha-olefin comonomer(s) having from 3 to 10 carbon atoms and having an $MFR_2$ of said (HMW) ethylene copolymer (2) of less than 1.0 g/10 min, preferably from 0.001 to 0.5 g/10 min; and wherein the LMW ethylene polymer (1) has a density which is greater than the density of the HMW ethylene copolymer (2).

According to another preferred embodiment of the polymer composition the first polyolefin component (A) is a linear polyethylene homo- or copolymer having a density of 900 kg/m$^3$ to 950 kg/m$^3$ and the second polyolefin polymer (B) is a low density polyethylene homo- or copolymer having a density of 880 kg/m$^3$ to 930 kg/m$^3$, preferably the first polyolefin polymer (A) is a linear polyethylene copolymer having a density of 910 kg/m$^3$ to 950 kg/m$^3$ and the second polyolefin polymer (B) is a low density polyethylene homo- or copolymer having a density of 900 kg/m$^3$ to 930 kg/m$^3$; and the first polyolefin component (A) comprises from 40 to 60 wt.%, preferably 40 to 50 wt.%, more preferably 42 to 50 wt.%, based on the combined amount of components (1) and (2), of a low molecular weight (LMW) ethylene polymer (1) selected from ethylene homo- or a copolymer of ethylene and one or more alpha-olefins having from 3 to 10 carbon atoms, and having an $MFR_2$ of from 4.0 to 1000 g/10 min, preferably from 4.0 to 800 g/10 min; and from 40 to 60 wt.%,

preferably 50 to 60 wt.%, more preferably 50 to 58 wt.%, based on the combined amount of components (1) and (2), of a high molecular weight (HMW) copolymer (2) of ethylene with one or more alpha-olefin comonomer(s) having from 3 to 10 carbon atoms and having an $MFR_2$ of said (HMW) ethylene copolymer (2) of less than 1.0 g/10 min, preferably from 0.001 to 0.5 g/10 min; and wherein the LMW ethylene polymer (1) has a density which is greater than the density of the HMW ethylene copolymer (2).

Another aspect of the present invention relates to a process as defined above or below for the preparation of the inventive polymer composition as defined above or below or in the claims.

The new polymer composition of the invention is highly useful in wide variety of end applications of polymers.

In one aspect an article comprises the polymer composition of the present invention as defined above or below or in the claims. Preferably the article is a wire or a cable.

Another aspect the present invention relates to the use of the polymer composition of the present invention as defined above or below or in the claims for the production of an article, where the article is a wire or a cable, preferably is a layer of a wire or cable.

The use of the polymer composition is in wire and cable (W&C) applications.

A further aspect of the invention relates to a cable comprising at least one layer which comprises the polymer composition of the present invention as defined above or below or in the claims.

Accordingly, the invention is further directed to a cable comprising a conductor surrounded by at a least one polymer layer comprising a polymer composition which comprises polyolefin components (A) and (B) and optionally a carbon black (CB) component, wherein the first polyolefin component (A) is present in an amount of from 65 wt.% to 99 wt.% based on the total polymer composition and the second polyolefin component (B) is present in an amount of from 35 wt.% down to 1 wt.% based on the total polymer composition; and wherein the polymer composition has a $SHI_{(1/100)}$ of from 6 to 25, a G' (5kPa) of 3000 Pa or less, and an environmental stress crack resistance (ESCR) of 1500h or more when determined according to IEC 60811-406:2012, procedure B (reagent is a solution of 10 % solution (by volume) in water of Igepal CO-630 (Antarox CO-630)).As stated above, the detailed description of the preferable properties, subgroups and embodiments of the polymer composition and the components thereof given above applies similarly for the preferable cables of the invention.

The said at least one layer of the cable comprising the polymer composition as defined above or below or in the claims is preferably at least a jacketing layer.

The cable may comprise two or more layers comprising the polymer composition.

The cable is preferably selected from

- a communication cable for communication applications comprising one or more wires surrounded by at least one layer, which is preferably an insulation layer, and the one wire or a bundle of the two or more wires is then surrounded by at least a sheath layer, which is also called as a jacketing layer and which forms the outermost polymeric layer for protecting the one or more wires, or from
- a power cable, which comprises a conductor surrounded by at least one layer, preferably at least an insulation layer and a jacketing layer, in that order,

wherein at least one layer comprises the polymer composition as defined above or in claims below. The communication and power cable have a well known meaning in the W&C field.

A communication cable is a cable for transferring information signals like telecommunication cables or coaxial cables. A telecommunication cable comprises a plurality of telesingle wires each surrounded by an insulation composition, typically an insulation layer. The number of telesingle wires may vary from a few in a data transmission cable to up to several thousands in telephone cables. All these wires are then surrounded by a common protective sheath layer, also called as jacketing layer, which surrounds and protects the wire bundle. Preferably the sheath layer comprises, preferably consists of the polymer composition of the invention.

A coaxial cable has typically one centre conductor and at least one outer concentric conductor. If more than one outer conductor is used, e.g. triaxial cables, they are separated by an electrically isolating layer. Also the coaxial cables are surrounded by at least a sheath, also called jacketing, layer. The sheath layer preferably comprises, more preferably consists of, the polymer composition of the invention.

A power cable is a cable transferring energy operating at any voltage, typically operating at voltages higher than 220 V. The voltage applied to the power cable can be alternating (AC), direct (DC), or transient (impulse). The polymer composition is also very suitable for layers of power cables such as low voltage (LV) (e.g. 1 kV cables), medium voltage (MV), high voltage (HV) and extra high voltage (EHV) power cables, which terms have well known meaning and indicate the operating level of such cable.

The preferable MV, HV and EHV cable embodiment of the invention comprises at least an inner semiconductive layer, insulation layer, an outer semiconductive layer and optionally, and preferably, a jacketing layer, in that order, wherein at least one of said layers, preferably at least the jacketing layer, comprises, preferably consists of, said polymer composition of the invention.

The preferable power cable embodiment is a LV power cable, such as 1kV Cable, which comprises at least an insulation layer and optionally a bedding layer and optionally and preferably, a jacketing layer, in that order, wherein at least one of said layers, preferably at least the jacketing layer, comprises, preferably consist of, said polymer composition of the invention.

Another aspect of the present invention relates to a process for producing a cable comprising

a) applying, preferably coextruding, one or more layers on a conductor, wherein at least one layer comprises the polymer composition of the present invention as described hereinbefore and below.

Cables according to the present invention can be produced according to the methods known in the art using the polymer composition as defined above or below or in the claims.

The components of the polymer composition can be provided to the cable preparation process in form of a grain, powder or pellets. Pellets can be of any shape or size.

The process for producing a cable, such as a communication or power cable, as defined above and below, comprises melt mixing, i.e. blending the components of polymer composition as defined above, including the subgroups and embodiments thereof, optionally with other polymer components and optionally with additives, above the melting point of at least the major polymer component(s) of the obtained mixture, and (co)extruding the obtained melt mixture on a conductor for forming one or more polymer layer(s), wherein at least one contains the polymer composition. Melt mixing is preferably carried out in a temperature of 20-25°C above the melting or softening point of polymer component(s).

Preferably, said polymer composition is a blend of polyolefin components (A) and (B) and the optional, and preferable, carbon black (CB) component (C). The polyolefin components (A) are (B) and preferable CB component (C) are mixed together in a conventional mixer and/or cable producing extruder. The used and preferable amounts are defined above and in claims. Further components, e.g. further additives, may be added before or during the cable manufacturing process. The processing temperatures and devices are well known in the art, e.g. conventional mixers and extruders, such as single or twins screw extruders, are suitable for the process of the invention.

The cable can be crosslinkable, wherein at least one of the layers can be crosslinked to provide a crosslinked cable. The invention provides also a cable which is crosslinkable and a crosslinked cable.

Accordingly, the cable manufacture process comprises optionally a further subsequent step b) crosslinking a crosslinkable polymer, e.g. a crosslinkable polymer composition, in at least one cable layer of the obtained cable, wherein the crosslinking is effected in the presence of a crosslinking agent, which is preferably a peroxide. Typically the crosslinking temperature is at least 20°C higher than the temperature used in meltmixing step and can be estimated by a skilled person.

Usable manufacturing and crosslinking processes and devices are known and well documented in the literature.

The layer of the cable comprising the polymer composition, preferably consists of the polymer composition.

**Determination methods**

Unless otherwise stated the following methods were used for determining the properties of the polymer composition or the components thereof as given in the description or in the experimental part and claims below. Unless otherwise stated, the samples used in the tests consist of the polymer composition or, respectively as specified, of the polymer component to be tested.

Cable manufacturing

Cables are produced as follows:
1 mm thick layer of the jacket has been extruded over a 3 mm thick Al-conductor. Extrusion has been done at line speed 75 m/min. Temperature profile: 170/175/180/190/190/210/210. Cooling water 23°C.

Shrinkage

The shrinkage (at 80°C/5 cycles) was measured on cable samples according to IEC60811-503:2012. The determination method of the shrinkage was performed in jacketing materials. The sample was placed in an air oven at determined temperature and time. This procedure was repeated at five cycles. The jacketing materials are designed and constructed according to EN 50290-2-24/A1, especially Table 1 and 2 of EN 50290-2-24/A1.

Deformation

Pressure test, inter alia the deformation test (115°C/6h), at high temperature for insulation and sheathing materials was performed according to EN 60811- 508: 2017. The cable sample was produced as described under cable manufacturing. The cable sample was placed in an air oven at a specified temperature with a constant load applied by means of a special indentation device. The percentage of indentation was measured after the specified test time using a digital gauge.

Absorption coefficient (at 375 nm)

The absorption coefficient was determined according to ASTM D 3349-17. This test method measures the amount of light transmitted through a thin film of black pigmented polyethylene and then an absorption coefficient was calculated from the amount of transmitted light at wavelength of 375 nm and the film thickness.

Melt index

The melt flow rate (MFR) was determined according to ISO 1133-1 (method A) and is indicated in g/10 min. The MFR is an indication of the melt viscosity of the polymer. The MFR is determined at 190°C for PE. The load under which the melt flow rate is determined is usually indicated as a subscript, for instance $MFR_2$ is measured under 2.16 kg load (condition D). $MFR_{21}$ is measured under 21.6 kg load.

Where one of the components is produced in the second polymerization step, its melt flow rate may be calculated by using the equation of Hagström

$$MI_b = \left( w \cdot MI_1^{-\frac{w^{-b}}{a}} + (1-w) \cdot MI_2^{-\frac{w^{-b}}{a}} \right)^{-a \cdot w^b}$$

where a = 5.2 and b = 0.7 for calculating $MFR_2$ and a = 10.4 and b = 0.5 for calculating $MFR_{21}$. Further, w is the weight fraction of the low molecular weight component in the blend and $MI_1$ and $MI_2$ are the respective MFR ($MFR_2$ or $MFR_{21}$) of the LMW and HMW components, respectively, and $MI_b$ is the respective MFR ($MFR_2$ or $MFR_{21}$) of the blend. Reference is made to Hagström, The Polymer Processing Society, Europe/Africa Region Meeting, Gothenburg, Sweden, August 19-21, 1997.

Density

Density of the polymer was measured according to ISO 1183-1 (method A). For the purpose of this invention the density of the blend can be calculated from the densities of the components according to:

$$\rho_b = \sum_i w_i \cdot \rho_i$$

where $\rho_b$ is the density of the blend,
$w_i$ is the weight fraction of component "i" in the blend and
$\rho_i$ is the density of the component "i".

Flexural Modulus

Flexural modulus was determined according to ISO 178:2010. The flexural properties of 3-point bending of PE material was determined by using a tensile testing machine. By using a climate chamber testing in different test temperatures can be performed. A test specimen of rectangular cross-section, resting on two supports, is deflected by means of a loading edge, acting on the specimen midway between the two supports. The test specimen is deflected in this way at constant rate at mid span until rupture occurs at the outer surface of the specimen or until a maximum strain of 5% is reached, whichever occurs first. During testing, the force applied to the specimen and the resulting deflection of the specimen at mid span are measured.

The test specimens were prepared from pellets of the test polymer composition pressed to a dimension of 80 x 10 x 4.0 mm (length x width x thickness). The length of the span between the supports was 64 mm, the test speed was 2 mm/min and the load cell was 100 N. The equipment used was an Alwetron TCT 25.

Tensile properties

Mechanical tests of determining the tensile properties are performed according to EN60811-501 by using a specimen type 5A.

Stress at break and Strain at break are measured according to ISO 527-1:1993 using a sample prepared according ISO527-2: 1993 5A (pressed test specimen prepared from pellets of the test polymer composition).

Stress at break tensile tester: Alwetron TCT10, Lorentzen & Wettre ABB

Draw speed: 50mm/min

Effective sample length: 50mm

The term "tensile strength" is used in the present text to denote the maximum tensile stress recorded in extending the test piece to breaking point. Thus, the terms "tensile stress at break" and "tensile strength" are used synonymously in the text.

ESCR (Environmental Stress Cracking)

The determination was carried out according to procedure described IEC 60811-406:2012, Chapter 8, *"Resistance to environmental stress cracking",* procedure B. The reagent is a solution of 10 % solution (by volume) in water of Igepal CO-630 (Antarox CO-630). The International Electrotechnical Commission (IEC) is a worldwide organization for standardization comprising all national electrotechnical committees (IEC National Committees). The pressed test specimens were prepared from pellets of the test polymer composition.

Rheology, dynamic (Viscosity, Shear Thinning Index):

Rheological parameters such as Shear Thinning Index SHI and Viscosity are determined by using a rheometer, preferably an Anton Paar Physica MCR 300 Rheometer on compression moulded samples under nitrogen atmosphere at 190 °C using 25 mm diameter plates and plate and plate geometry with a 1.8 mm gap according to ASTM 144095. The oscillatory shear experiments were done within the linear viscosity range of strain at frequencies from 0.05 to 300 rad/s (ISO 6721-1). Five measurement points per decade were made. The method is described in detail in WO 00/22040.

The values of storage modulus (G'), loss modulus (G") complex modulus (G*) and complex viscosity ($\eta$*) were obtained as a function of frequency ($\omega$).

$$\tan (\delta) \text{ (angular freq.)} = G''/G'$$

Shear thinning index (SHI), which correlates with MWD and is independent of Mw, was calculated according to Heino (*"Rheological characterization of polyethylene fractions"* Heino, E.L., Lehtinen, A., Tanner J., Seppälä, J., Neste Oy, Porvoo, Finland, Theor. Appl. Rheol., Proc. Int. Congr. Rheol, 11th (1992), 1, 360-362, and *"The influence of molecular structure on some rheological properties of polyethylene",* Heino, E.L., Borealis Polymers Oy, Porvoo, Finland, Annual Transactions of the Nordic Rheology Society, 1995.).

The SHI can be defined as the ratio between two complex shear viscosities ($\eta$*) determined at two specific complex shear modulus (G*), equation 1.

$$SHI(^x/_y) \quad = \quad \frac{\eta^* \; for \; (G^* = x \; kPa)}{\eta^* \; for \; (G^* = y \; kPa)} \qquad (1)$$

For example, using the values of complex modulus of 1 kPa and 100 kPa, then $\eta$*(1 kPa) and $\eta$*(100 kPa) are obtained at a constant value of complex modulus of 1 kPa and 100 kPa, respectively. The shear thinning index $SHI_{1/100}$ is then defined as the ratio of the two viscosities $\eta$*(1 kPa) and $\eta$*(100 kPa), i.e. $\eta$(1)/$\eta$(100).

The determination of parameters such as Shear Thinning Indexes (SHI), and Loss Tangent (tan $\delta$) shall be done with specific Rheoplus Macro calculations, as provided by Rheometer Supplier.

The values needed for the calculation of the so-called SHI and EI are determined by means of a single point interpolation procedure, as defined by Rheoplus software. In situations for which a given G* value is not experimentally reached, the value is determined by means of an extrapolation, using the same procedure as before. In both cases (interpolation or extrapolation), the option from Rheoplus"- Interpolate y-values to x-values from parameter" and the "logarithmic interpolation type" should be applied.

OIT measurement

The oxidation induction time (OIT) at 200°C was determined with a TA Instrument Q20 according to ISO11357-6. Calibration of the instrument was performed according to ISO 11357-1. The oxidation induction time is the time interval between the initiation of oxygen flow and the onset of the oxidative reaction. Each presented data point is the average of three independent measurements.

Cold blend

The Cold bend was measured according to IEC 60811-504. Test specimen were cables produced on the cable line.

Shore D

The Shore D is measured according to ISO 868.

**Experimental part**

Polyolefin components of the inventive examples (IE1 to IE10)

*Polyolefin component (A)*

LLDPE or MDPE being a bi- or multimodal znLLDPE or znMDPE and having the properties as given in Table 1.

*Polyolefin component (B)*

As LDPE a conventional low density polyethylene homopolymer, produced in a high pressure process, in an autoclave reactor was used in examples IE1 to IE7. The LDPE can also be recycled material, Ecoplast NAV102 (Ecoplast Kunststoffrecycling GmbH, Austria), which was used in examples IE8 to IE10. The applied LDPE has the properties as given in Table 1.

*CB component (C)*

Carbon Black is furnace Carbon Black, Printex Alpha A (obtained from Orion Engineered Carbons GmbH).

**Catalyst preparation**

Complex preparation

87 kg of toluene was added into the reactor. Then 45.5 kg BOMAG-A in heptane was also added in the reactor. 161 kg 99.8 % 2-ethyl-1-hexanol was then introduced into the reactor at a flow rate of 24-40 kg/h. The molar ratio between BOMAG-A and 2-ethyl-1-hexanol was 1:1.83.

Solid catalyst component preparation

275 kg silica (ES747JR of Crossfield, having average particle size of 20 $\mu$m) activated at 600 °C in nitrogen was charged into a catalyst preparation reactor. Then, 411 kg 20 % EADC (2.0 mmol/g silica) diluted in 555 litres pentane was added into the reactor at ambient temperature during one hour. The temperature was then increased to 35 °C while stirring the treated silica for one hour. The silica was dried at 50 °C for 8.5 hours. Then 655 kg of the complex prepared as described above (2 mmol Mg/g silica) was added at 23 °C during ten minutes. 86 kg pentane was added into the reactor at 22 °C during ten minutes. The slurry was stirred for 8 hours at 50 °C. Finally, 52 kg $TiCl_4$ was added during 0.5 hours at 45 °C. The slurry was stirred at 40 °C for five hours. The catalyst was then dried by purging with nitrogen.

**Polymerisation**

Inventive example 1 (IE1)

A loop reactor having a volume of 50 dm$^3$ was operated at a temperature of 70 °C and a pressure of 63 bar. Into the reactor were ethylene, 1-butene, propane diluent and hydrogen fed so that the feed rate of ethylene was 1.0 kg/h, hydrogen was 5.0 g/h, 1-butene was 80 g/h and propane was 50 kg/h. In addition, 11 g/h of a solid Ziegler polymerisation catalyst component was introduced into the reactor together with triethylaluminium cocatalyst so that the molar ratio of Al/Ti was about 15. The production rate was 1 kg/h.

A stream of slurry was continuously withdrawn and directed to a loop reactor having a volume of 150 dm$^3$ and which was operated at a temperature of 85 °C and a pressure of 61 bar. Into the reactor were further fed additional ethylene, propane diluent, 1-butene comonomer and hydrogen so that the ethylene concentration in the fluid mixture was 4.5 % by mole, the hydrogen to ethylene ratio was 240 mol/kmol, the 1-butene to ethylene ratio was 450 mol/kmol and the fresh propane feed was 41 kg/h. The ethylene copolymer withdrawn from the reactor had MFR$_2$ of 280 g/10 min and density of 948 kg/m$^3$. The production rate was 19 kg/h.

A stream of slurry from the reactor was withdrawn intermittently and directed into a loop reactor having a volume of 350 dm$^3$ and which was operated at 85 °C temperature and 54 bar pressure. Into the reactor was further added a fresh propane feed of 69 kg/h and ethylene, 1-butene and hydrogen so that the ethylene content in the reaction mixture was 4.0 mol-%, the molar ratio of 1-butene to ethylene was 580 mol/kmol and the molar ratio of hydrogen to ethylene was 270 mol/kmol. The ethylene copolymer withdrawn from the reactor had MFR$_2$ of 300 g/10 min and density of 948 kg/m$^3$. The production rate was 25 kg/h.

The slurry was withdrawn from the loop reactor intermittently by using settling legs and directed to a flash vessel operated at a temperature of 50 °C and a pressure of 3 bar. From there the polymer was directed to a fluidized bed gas phase reactor (GPR) operated at a pressure of 20 bar and a temperature of 75 °C. Additional ethylene, 1-butene comonomer, nitrogen as inert gas and hydrogen were added so that the ethylene content in the reaction mixture was 18 mol-%, the ratio of hydrogen to ethylene was 18 mol/kmol and the molar ratio of 1-butene to ethylene was 750 mol/kmol. The polymer production rate in the gas phase reactor was 55 kg/h and thus the total polymer withdrawal rate from the gas phase reactor was about 100 kg/h. The polymer had a melt flow rate MFR$_2$ of 0.8 g/10 min and a density of 921 kg/m$^3$. The production split (weight-% 1$^{st}$ stage component/weight-% 2$^{nd}$ stage component/weight-% 3$^{rd}$ stage component) was 20/25/55 (or 1/19/25/55 including the prepolymer material).

The polymer powder was mixed under nitrogen atmosphere with LDPE component, 2.6 wt.% carbon black, 1000 ppm of Ca-stearate and 3000 ppm of Irganox. Then it was compounded and extruded under nitrogen atmosphere to pellets by using a CIMP90 extruder so that the SEI was 200 kWh/ton and the melt temperature 230 °C.

Inventive examples 2 to 10 (IE2 to IE10)

The procedure of Example 1 was followed except that the operation conditions in the loop reactor and the gas phase reactor were modified as shown in Table 1. IE10 was carried out without carbon black addition in the extrusion step.

Comparative Example 1 (CE 1)

A commercially available reference grade of a unimodal linear low density polyethylene (LLDPE) used in cable jacketing layers and comprising 78 wt.% of a conventional LLDPE reference copolymer produced in the presence of a conventional Cr-catalyst in a low pressure process and 19 wt.% of a conventional LDPE copolymer (tubular LDPE having MFR2 = 2 g/10min), 2.6 wt.% of a CB component (C) and 0.4 wt.% of additives were blended (mixed and pelletised using a twin screw extruder). The CB component is the same as CB (C) given above for inventive compositions. The properties are listed in Table 2.

The properties and experimental data of the inventive examples 1 to 10 (IE 1 to IE 10), comparative example 1 (CE 1) and of the inventive examples 5 to 7 (IE 5 to IE 7) of polymer compositions are shown in Tables 2 and 3. The inventive examples 1 to 9 (IE 1 to IE 9) and comparative example 2 contain 2.4 to 2.8 wt.% carbon black. Inventive example 10 (IE 10) does not contain carbon black.

Table 1: Polymerisation conditions and the product properties of the obtained polymer of inventive examples 1 to 10

| Example | IE 1 | IE 2 | IE 3 | IE 4 | IE 5 | IE 6 | IE 7 | IE 8 | IE 9 | IE 10 |
|---|---|---|---|---|---|---|---|---|---|---|
| **1st loop** | | | | | | | | | | |
| $C_2$ [mol-%] | 4.5 | 4.5 | 4.5 | 4.5 | 4.6 | 4.5 | 4.8 | 4.5 | 4.8 | 4.8 |
| $H_2/C_2$ [mol/kmol] | 240 | 240 | 240 | 240 | 230 | 240 | 360 | 240 | 360 | 360 |
| $C_4/C_2$ [mol/kmol] | 450 | 450 | 450 | 450 | 480 | 450 | 0 | 450 | 0 | 0 |
| $MFR_2$ [g/10 min] | 280 | 280 | 280 | 280 | 240 | 280 | 370 | 280 | 370 | 370 |
| Density [kg/m³] | 948 | 948 | 948 | 948 | 945 | 948 | 970 | 948 | 970 | 970 |
| **2nd loop** | | | | | | | | | | |
| $C_2$ [mol-%] | 4.0 | 4.0 | 4.0 | 4.0 | 4.2 | 4.0 | 4.7 | 4.0 | 4.7 | 4.7 |
| $H_2/C_2$ [mol/kmol] | 270 | 270 | 270 | 270 | 300 | 270 | 410 | 270 | 410 | 410 |
| $C_4/C_2$ [mol/kmol] | 580 | 580 | 580 | 580 | 590 | 580 | 0 | 580 | 0 | 0 |
| $MFR_2$ [g/10 min] | 300 | 300 | 300 | 300 | 325 | 300 | 395 | 300 | 395 | 395 |
| Density [kg/m³] | 948 | 948 | 948 | 948 | 947 | 948 | 971 | 948 | 971 | 971 |
| **GPR (gas phase reactor)** | | | | | | | | | | |
| $C_2$ [mol-%] | 18 | 18 | 18 | 18 | 17 | 18 | 22 | 18 | 22 | 23 |
| $H_2/C_2$ [mol/kmol] | 18 | 18 | 18 | 18 | 19 | 18 | 26 | 18 | 26 | 22 |
| $C_4/C_2$ [mol/kmol] | 750 | 750 | 750 | 750 | 900 | 750 | 520 | 750 | 520 | 440 |
| Polymer $MFR_2$ [g/10 min] | 0.8 | 0.8 | 0.8 | 0.8 | 0.9 | 0.8 | 0.6 | 0.8 | 0.6 | 0.5 |
| Polymer $MFR_{21}$ [g/10 min] | 68 | 68 | 68 | 68 | 72 | 68 | 44 | 68 | 44 | 39 |
| Polymer density [kg/m³] | 921 | 921 | 921 | 921 | 919 | 921 | 935 | 921 | 935 | 940 |
| Split ¹⁾ | 1/19/25/55 | 1/19/25/55 | 1/19/25/55 | 1/19/25/55 | 1/19/25/55 | 1/19/25/55 | 1/18/24/57 | 1/19/25/55 | 1/18/24/57 | 1/19/25/55 |
| **Final** | | | | | | | | | | |
| Amount of LDPE [wt.%] | 19 | 24 | 19 | 19 | 22 | 4 | 4 | 24 ²⁾ | 24 ²⁾ | 35 ²⁾ |
| $MFR_2$ of LDPE [g/10 min] | 0,25 | 0,25 | 2,1 | 7,5 | 2,1 | 2,1 | 2,1 | 0.5 | 0.5 | 0.5 |
| $MFR_2$ [g/10 min] | 0,63 | 0,57 | 0,87 | 1,00 | 0,91 | 0,90 | 0,63 | 0,57 | 0,60 | 0,71 |
| $MFR_{21}$ [g/10 min] | n.a. | n.a. | n.a. | n.a. | 73 | 69 | 44 | n.a. | n.a. | n.a. |

(continued)

| Final | | | | | | | | | | |
|---|---|---|---|---|---|---|---|---|---|---|
| Density [kg/m³] | 933,7 | 932,8 | 933,7 | 933,5 | 931.9 | 934.7 | 948.4 | 935.7 | 950.1 | 935.5 |

1) Given as % prepoly material/% 1st loop material/% 2nd loop material/% gas phase reactor (GPR) material
2) Recycled LDPE Ecoplast NAV102

Table 2: Properties and experimental data of the inventive examples 1 to 10 (IE 1 to IE 10) and comparative examples 1 and 2 (CE 1, CE 2) of polymer compositions

| | IE 1 | IE 2 | IE 3 | IE 4 | IE 5 | IE 6 | IE 7 | IE8 | IE 9 | IE10 | CE1 |
|---|---|---|---|---|---|---|---|---|---|---|---|
| Component (A) | Multimodal LLDPE | Multimodal LLDPE | Multimodal LLDPE | Multimodal LLDPE | Multimodal LLDPE | Multimodal LLDPE | Multimodal MDPE | Multimodal LLDPE | Multimodal MDPE | Multimodal MDPE | Unimodal LLDPE |
| Component (B); LDPE [wt. %] | 19 | 24 | 19 | 19 | 22 | 4 | 4 | 24 | 24 | 35 | 19 |
| LDPE MFR2 [g/10 min] | 0.25 | 0.25 | 2.1 | 7.5 | 2.1 | 2.1 | 2.1 | 0.5 | 0.5 | 0.5 | 2.1 |
| $MFR_2$ [g/10 min] | 0.63 | 0.57 | 0.87 | 1.00 | 0.91 | 0.90 | 0.63 | 0.86 | 0.57 | 0.60 | 0.71 |
| Density [$kg/m^3$] | 933.7 | 932.8 | 933.7 | 933.5 | 931.9 | 934.7 | 948.4 | 935.7 | 950.1 | 935.7 | 932.8 |
| $SHI_{(1/100)}$ | 15.4 | 16.8 | 12.8 | 14.1 | 15.2 | 11.9 | 9.2 | 13.2 | 11.3 | 12.9 | 27.8 |
| G' (5 kPa) [Pa] | 2390 | 2490 | 2160 | 2270 | 2290 | 2120 | 1930 | 2270 | 2150 | 2300 | 3250 |
| $\tan(\delta)$ (0.05 rad/s) | 3.6 | 3.4 | 4.7 | 4.7 | 4.4 | 4.6 | 4.6 | 4.3 | 3.7 | 3.6 | 2.2 |
| Tensile stress at break [MPa] | 27.2 | 27.3 | 26.4 | 26.5 | 26.6 | 28.8 | 31.5 | 22.6 | 26.6 | 24.9 | 21.8 |
| Stress at Yield [MPa] | 12.1 | 12.2 | 11.9 | 11.9 | 10.4 | 11.7 | 16.7 | 11.8 | 18.1 | 15.9 | 11.4 |
| ESCR [h] | >2000 interr. | n.a. | n.a. | >2000 interr. | >2000 interr. | >2000 interr. | >2000 interr. | n.a. | n.a. | n.a. | >2000 interr. |

EP 3 838 984 A1

From Table 2 can be derived that all inventive examples 1 to 10 (IE1 to 10) have a higher tensile strength than the comparative example 1. Besides, the shear thinning index, $SHI_{(1/100)}$, as well as the storage modulus, G', are lower than comparative example 1.

Table 3: Properties and experimental data of the inventive examples 5 to 7 (IE 5 to IE 7) and comparative example 2 (CE 2) of polymer compositions

|  | IE 5 | IE 6 | IE 7 | CE 1 |
|---|---|---|---|---|
| Component (A) | Multimodal LLDPE | Multimodal LLDPE | Multimodal MDPE | Unimodal LLDPE |
| Component (B); LDPE [wt.%] | 22 | 4 | 4 | 19 |
| $MFR_2$ [g/10 min] | 0.91 | 0.91 | 0.63 | 0.71 |
| $SHI_{(1/100)}$ | 15.2 | 11.9 | 9.2 | 27.8 |
| G' (5 kPa) [Pa] | 2290 | 2120 | 1930 | 3250 |
| $tan(\delta)$ (0.05 rad/s) | 4.4 | 4.6 | 4.6 | 2.2 |
| Density [kg/m$^3$] | 931.9 | 934.7 | 948.4 | 932.8 |
| OIT (200C) [min] | >65 | >66 | >65 | >65 |
| Absorption coefficient at 375nm [abs/m] | 428 | 471 | 487 | 411 |
| Cold bend | pass | pass | pass | pass |
| Deformation (115°C/6h) [%] | 21 | 2 | 1 | 30 |
| ESCR (cooling 5C/h) [h] | >2000h, interr. | >2000h, interr. | >2000h, interr. | >2000h, interr. |
| Flexural modulus (50mm/min) [MPa] | 371 | 421 | 660 | 347 |
| Strain at break (50mm/min) [%] | 889 | 865 | 812 | 951 |
| Tensile stress at break (50mm/min) [MPa] | 26.6 | 28,9 | 31.5 | 21.4 |
| Tensile stress at break (50mm/min)* [MPa] | 25.2 | 26.7 | 27.3 | 20.1 |
| Shrinkage (80°C/5 cycles) [%] | 0.58 | 0.46 | 0.78 | 0.88 |
| Shore D (1sec) | 53 | 55 | 60 | 53 |
| *measured after ageing for 14 days at 110°C. | | | | |

From Table 3 can be derived that apart of the advantageous rheological parameters the deformation and shrinkage are also better than comparative example 1.

Particularly IE5 to IE7 show the good balance between improved tensile strength even after ageing for 24h and shrinkage as well as deformation over a broad density range.

Comparative example 2:

Multimodal znLLDPE polymer, which is similar to the polymer disclosed in EP 2 471 077 B1 inventive example 2, was prepared in pilot scale reactor system containing loop reactor and gas phase reactor. Product properties are shown in Table 4.

Table 4: Product properties of the obtained polymer used for comparative example 2

| | |
|---|---|
| $MFR_2$ of polymer produced in loop reactor [g/10min] | 290 |
| Density of polymer produced in loop reactor [kg/m$^3$] | 950 |
| Split, loop/gpr [wt.%/wt.%] | 41/59 |
| $MFR_2$ of pelletised final polymer [g/10min] | 0.2 |
| Density of pelletised final polymer [kg/m$^3$] | 923 |

This polymer was then melt homogenised and pelletised with conventional LDPE having $MFR_2$ = 2 g/10 min and carbon black masterbatch on twin screw extruder. The properties of the final polymer composition of comparative example 2 (CE2) are shown in Table 5.

Table 5: Product properties of the polymer composition of comparative example 2

| | |
|---|---|
| Multimodal LLDPE [wt.%] | 38 |
| LDPE [wt.%] | 55 |
| CBMB [wt.%] | 7 |
| $MFR_2$ [g/10min] | 0.3 |
| Density [kg/m$^3$] | 934 |
| CB content [wt.%] | 2.5 |
| $SHI_{(1/100)}$ | 33.2 |
| $SHI_{(2.7/210)}$ | 101 |
| G'(5 kPa) [Pa] | 2942 |
| Tan (d) 0.05 [rad/s] | 2.4 |

## Claims

1. Polymer composition comprising

(A) a first polyolefin component, wherein the first polyolefin component comprises, preferably consists of, a multimodal polyolefin polymer,
(B) a second polyolefin component, and
(C) optionally a filler,

wherein the first polyolefin component (A) is present in an amount of from 65 wt.% to 99 wt.% based on the total polymer composition and the second polyolefin component (B) is present in an amount of from 35 wt.% down to 1 wt.% based on the total polymer composition; and
wherein the polymer composition has a $SHI_{(1/100)}$ of from 6 to 25, a G' (5kPa) of 3000 Pa or less, and an environmental stress crack resistance (ESCR) of 1500h or more when determined according to IEC 60811-406:2012, procedure B (reagent is a solution of 10 % solution (by volume) in water of Igepal CO-630 (Antarox CO-630)).

2. The polymer composition according to claim 1,
wherein the polymer composition has a $SHI_{(1/100)}$ of from 7 to 23, preferably of from 8 to 21; and/or
wherein the polymer composition has a G' (5kPa) of from 1000 to 2900 Pa, preferably of from 1500 to 2800 Pa, more preferably from 1700 to 2700 Pa.

3. The polymer composition according to claim 1 or 2, wherein the multimodal polyolefin polymer of the first polyolefin component (A) is a bi- or multimodal polymer, and preferably a multimodal polymer.

4. The polymer composition according to any one of the preceding claims, wherein the polymer composition has one or more, preferably at least two, more preferably all of the following properties,

- a tensile strength of 22 MPa or more, preferably 24 MPa or more measured according to ISO 527-2; and/or
- a tensile strength of 22 MPa or more, preferably 24 MPa or more measured according to ISO 527-2 after ageing 14 days at 110 °C according to IEC60811-401; and/or
- a deformation (115°C/6h) of less than 30%, preferably 27% or less, preferably 25% or less; and/or
- a shrinkage of 0.80% or less, preferably of 0.75% or less.

5. The polymer composition according to any one of the preceding claims, wherein the polymer composition has an environmental stress crack resistance (ESCR) of 2000h or more, preferably of 2500h or more, when determined according to IEC 60811-406:2012, procedure B (reagent is a solution of 10 % solution (by volume) in water of Igepal CO-630 (Antarox CO-630)).

6. The polymer composition according to any one of the preceding claims, wherein the polymer composition has one or more, preferably all of the following properties,

  - strain at break (%) of 600% or more, preferably of 700% or more, when determined according to ISO 527-1:1993 using a pressed test specimen prepared according to ISO 527-2:1993 5A; and/or
  - an absorption coefficient (at 375 nm) of 350 abs/m or more, preferably of 400 abs/m or more when measured according to ASTM D-3349-17.

7. The polymer composition according to any one of the preceding claims, wherein the polymer composition has a density of 926 kg/m$^3$ or more, preferably of from 928 kg/m$^3$ to 960 kg/m$^3$, more preferably of from 930 kg/m$^3$ to 955 kg/m$^3$.

8. The polymer composition according to any one the preceding claims, wherein the polymer composition has a MFR$_2$ (2.16 kg; 190 °C) of 0.1 to 10 g/10min, preferably of 0.1 to 5 g/10min measured according to ISO 1133.

9. The polymer composition according to any one of the preceding claims, wherein the optional filler (C) is present in the polymer composition and the filler is carbon black; and/or wherein the filler (C) is present in an amount of 0.1 wt.% to 10 wt.%, preferably 0.1 wt.% to 7 wt.%, more preferably 0.1 wt.% to 5 wt.% based on the total polymer composition.

10. The polymer composition according to any one of the preceding claims, wherein the first polyolefin component (A) has a MFR$_2$ (2.16 kg; 190 °C) of 0.05 to 10 g/10min, preferably of 0.1 to 5 g/10min measured according to ISO 1133; and/or wherein the second polymer component (B) has a MFR$_2$ (2,16 kg; 190 °C) of 0.05 to 15 g/10min, preferably of 0.1 to 10 g/10min measured according to ISO 1133.

11. The polymer composition according to any one of the preceding claims, wherein the first polyolefin component (A) is a linear polyethylene homo- or copolymer having a density of 900 kg/m$^3$ to 950 kg/m$^3$ and the second polyolefin polymer (B) is a low density polyethylene homo- or copolymer having a density of 880 kg/m$^3$ to 930 kg/m$^3$, preferably the first polyolefin polymer (A) is a linear polyethylene copolymer having a density of 910 kg/m$^3$ to 950 kg/m$^3$ and the second polyolefin polymer (B) is a low density polyethylene homo- or copolymer having a density of 900 kg/m$^3$ to 930 kg/m$^3$.

12. The polymer composition according to claim 11, wherein the first polyolefin component (A) comprises from 40 to 60 wt.%, preferably 40 to 50 wt.%, more preferably 42 to 50 wt%, based on the combined amount of components (1) and (2), of a low molecular weight (LMW) ethylene polymer (1) selected from ethylene homopolymer or a copolymer of ethylene and one or more alpha-olefins having from 3 to 10 carbon atoms, and having an MFR$_2$ of from 4.0 to 1000 g/10 min, preferably from 4.0 to 800 g/10 min; and from 40 to 60 wt.%, preferably 50 to 60 wt.%, more preferably 50 to 58 wt.%, based on the combined amount of components (1) and (2), of a high molecular weight (HMW) copolymer (2) of ethylene with one or more alpha-olefin comonomer(s) having from 3 to 10 carbon atoms and having an MFR$_2$ of said (HMW) ethylene copolymer (2) of less than 1.0 g/10 min, preferably from 0.001 to 0.5 g/10 min; and wherein the LMW ethylene polymer (1) has a density which is greater than the density of the HMW ethylene copolymer (2).

13. The polymer composition according to any one of the preceding claims, wherein the first polyolefin component (A) is present in an amount of from 70 to 98 wt.% based on the total polymer composition and the second polyolefin component (B) is present in an amount of from 2 to 30 wt.% based on the total polymer composition.

14. Article comprising a polymer composition according to any of claims 1 to 13, preferably the article is a wire or cable.

15. Use of a polymer composition according to any of claims 1 to 13 for the production of an article, preferably the article is a wire or cable.

16. Cable comprising at least one layer, which comprises the polymer composition according to claims 1 to 13.

17. A process for producing a cable comprising
applying, preferably coextruding, one or more layers on a conductor, wherein at least one layer comprises the polymer composition according to claims 1 to 13.

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2011/023440 A1 (BOREALIS AG [AT]; STEFFL THOMAS [SE] ET AL.) 3 March 2011 (2011-03-03) * page 33; example Inv. Polymer composition 3; table 1 * * page 30, line 1 - page 32, line 5 * * claims 11-14 * | 1-17 | INV. C08L23/08 |
| X | WO 2016/184812 A1 (BOREALIS AG [AT]) 24 November 2016 (2016-11-24) * page 25; examples; table 1 * * page 26; examples; table 4 * * claim 11 * | 1-15 | |
| X | EP 2 746 334 A1 (BOREALIS AG [AT]) 25 June 2014 (2014-06-25) * claims 1,2,12,13 * * paragraphs [0001], [0006], [0014] - [0016], [0092], [0093] * | 1-15 | |
| X,D | WO 2005/002744 A1 (BOREALIS TECH OY [FI]; LEHTINEN ARJA [FI] ET AL.) 13 January 2005 (2005-01-13) * page 24; examples 5,6,9-14; table 2 * * page 1, line 30 - page 2, line 19 * | 1-15 | TECHNICAL FIELDS SEARCHED (IPC) C08L |

The present search report has been drawn up for all claims

| Place of search | Date of completion of the search | Examiner |
|---|---|---|
| Munich | 2 June 2020 | Lippert, Sigrid |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

.........................................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 21 8827

This annex lists the patent family members relating to the patent documents cited in the above-mentioned European search report.
The members are as contained in the European Patent Office EDP file on
The European Patent Office is in no way liable for these particulars which are merely given for the purpose of information.

02-06-2020

| Patent document cited in search report | | Publication date | Patent family member(s) | | Publication date |
|---|---|---|---|---|---|
| WO 2011023440 | A1 | 03-03-2011 | CN | 102483971 A | 30-05-2012 |
| | | | EP | 2471077 A1 | 04-07-2012 |
| | | | ES | 2433646 T3 | 12-12-2013 |
| | | | PL | 2471077 T3 | 30-04-2014 |
| | | | US | 2012325515 A1 | 27-12-2012 |
| | | | WO | 2011023440 A1 | 03-03-2011 |
| WO 2016184812 | A1 | 24-11-2016 | CN | 107580611 A | 12-01-2018 |
| | | | EP | 3298067 A1 | 28-03-2018 |
| | | | ES | 2741846 T3 | 12-02-2020 |
| | | | WO | 2016184812 A1 | 24-11-2016 |
| EP 2746334 | A1 | 25-06-2014 | AU | 2013360679 A1 | 02-07-2015 |
| | | | AU | 2016200958 A1 | 03-03-2016 |
| | | | CN | 104870550 A | 26-08-2015 |
| | | | EP | 2746334 A1 | 25-06-2014 |
| | | | ES | 2538590 T3 | 22-06-2015 |
| | | | WO | 2014096104 A1 | 26-06-2014 |
| WO 2005002744 | A1 | 13-01-2005 | AT | 350173 T | 15-01-2007 |
| | | | BR | PI0412018 A | 15-08-2006 |
| | | | CA | 2530361 A1 | 13-01-2005 |
| | | | CN | 1816399 A | 09-08-2006 |
| | | | DE | 602004004132 T2 | 15-11-2007 |
| | | | EA | 200600017 A1 | 25-08-2006 |
| | | | EP | 1638695 A1 | 29-03-2006 |
| | | | ES | 2279389 T3 | 16-08-2007 |
| | | | JP | 2009513377 A | 02-04-2009 |
| | | | KR | 20060027823 A | 28-03-2006 |
| | | | PL | 1638695 T3 | 29-06-2007 |
| | | | US | 2006177675 A1 | 10-08-2006 |
| | | | WO | 2005002744 A1 | 13-01-2005 |
| | | | ZA | 200600648 B | 25-04-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 2471077 B1
- WO 9618662 A
- WO 99065039 A
- WO 97003124 A
- WO 9728170 A
- WO 9832776 A
- WO 9961489 A
- WO 03010208 A
- WO 03051934 A
- WO 03051514 A
- WO 2004085499 A
- WO 2005002744 A
- EP 1752462 A
- EP 1739103 A
- EP 688794 A
- WO 9951646 A
- WO 0155230 A
- WO 2005118655 A
- EP 810235 A
- WO 2003106510 A
- WO 2015086812 A
- WO 2015086813 A
- WO 2007045315 A
- WO 2019121730 A
- WO 2017102293 A
- WO 2013083285 A
- EP 1923404 A
- WO 9308222 A
- WO 0022040 A

### Non-patent literature cited in the description

- Rauwendaal: Polymer Extrusion. Hanser, 1986, 460-489
- Encyclopedia of Polymer Science and Engineering. 1986, vol. 6, 383-410
- Polyethylene: High-pressure. **R.KLIMESCH ; D.LITTMANN ; F.-O .MÄHLING.** Encyclopedia of Materials: Science and Technology. Elsevier Science Ltd, 2001, 7181-7184
- **HAGSTRÖM.** *The Polymer Processing Society, Europe/Africa Region Meeting,* 19 August 1997
- Rheological characterization of polyethylene fractions. **HEINO, E.L. ; LEHTINEN, A. ; TANNER J. ; SEPPÄLÄ, J.** Theor. Appl. Rheol., Proc. Int. Congr. Rheol. Neste Oy, 1992, vol. 1, 360-362
- The influence of molecular structure on some rheological properties of polyethylene. **HEINO, E.L.** Annual Transactions of the Nordic Rheology Society. Borealis Polymers Oy, 1995